# EUROPEAN PATENT APPLICATION

(11) **EP 4 794 143 A1**
(43) Date of publication of application: **19.08.2026**
(21) Application number: 25870675.3
(22) Date of filing: 14.08.2025
(51) Int. Cl.: H02G 1/16

(54) **OIL-FILLED SUBMARINE CABLE SEALING AND REPAIR DEVICE**

(30) Priority: 24.09.2024 CN 202411332661
(71) Applicant: Electric Power Research Institute, China Southern Power Grid, Guangzhou, Guangdong 510663 (CN)
(72) Inventor: HUI, Baojun, Guangzhou, Guangdong 510663 (CN); HOU, Shuai, Guangzhou, Guangdong 510663 (CN); FU, Mingli, Guangzhou, Guangdong 510663 (CN); FENG, Bin, Guangzhou, Guangdong 510663 (CN); LIU, Jie, Guangzhou, Guangdong 510663 (CN); ZHAO, Linjie, Guangzhou, Guangdong 510663 (CN); JIA, Lei, Guangzhou, Guangdong 510663 (CN); ZHU, Wenbo, Guangzhou, Guangdong 510663 (CN); ZHAN, Yunpeng, Guangzhou, Guangdong 510663 (CN); CAI, Xipeng, Guangzhou, Guangdong 510663 (CN); LU, Yong, Guangzhou, Guangdong 510663 (CN); CHEN, Xipeng, Guangzhou, Guangdong 510663 (CN); JING, Mingkang, Guangzhou, Guangdong 510663 (CN); CHEN, Yun, Guangzhou, Guangdong 510663 (CN); CHENG, Zhongkun, Guangzhou, Guangdong 510663 (CN)
(74) Representative: Hoffmann Eitle
(86) International application number: PCT/CN2025/114542
(87) International publication number: WO 2026/066771

(57) **Abstract**

The present invention provides a repairing apparatus for sealing the oil-filled submarine cable. The repairing apparatus for sealing the oil-filled submarine cable includes a main housing and a sealing assembly. The main housing is configured to be sleeved on a section of the oil-filled submarine cable where a leakage point is located. The sealing assembly is provided in the main housing, and configured to divide a space between the main housing and the oil-filled submarine cable into an oil drain region corresponding to the leakage point, at least one first sealing region on one side of the oil drain region, and at least one second sealing region on the other side of the oil drain region along an axial direction of the main housing. An Oil drain valve is in communication with the oil drain region, and sealant is filled in both the first sealing region and the second sealing region. The aforementioned repairing apparatus for sealing the oil-filled submarine cable is capable of implementing sealing on leakage of the oil-filled submarine cable without destroying the armor layer.

## Description

### TECHNICAL FIELD

The present invention relates to the field of oil-filled submarine cable repair technologies, and in particular, to a repairing apparatus for sealing the oil-filled submarine cable.

### BACKGROUND

Oil-filled submarine cable is a submarine cable that uses insulation oil as a pressurized fluid and allows insulated oil to flow freely in cables. After the oil-filled submarine cable is damaged, the insulation oil inside the oil-filled submarine cable will leak, which not only pollutes the sea water, but also affects the stable operation of the power grid system.

Currently, the repairing of the oil-filled submarine cable is performed in a manner of continuous repairing, water isolation repairing, and sealing repairing. The sealing repairing is to form physical sealing outside the damaged point without repairing the main body, and the sealing repairing has the technical advantages of simplicity, rapidity and low cost.

Currently, most of the sealing repairing manners for the oil-filled submarine cable are referring to the sealing repairing manner for the submarine oil and gas pipeline. However, the conventional sealing repairing manner for the submarine oil and gas pipeline is not ideal for the sealing repairing effect for the oil-filled submarine cable.

### SUMMARY

Accordingly, it is necessary to provide a repairing apparatus for sealing an oil-filled submarine cable to improve a sealing repairing effect on the oil-filled submarine cable leakage.

A repairing apparatus for sealing the oil-filled submarine cable is provided, which includes a main housing, a sealing assembly and an oil drain valve. The main housing is configured to be sleeved on a section of the oil-filled submarine cable where a leakage point is located. The sealing assembly is provided in the main housing, and configured to divide a space between the main housing and the oil-filled submarine cable into an oil drain region corresponding to the leakage point, at least one first sealing region on one side of the oil drain region, and at least one second sealing region on the other side of the oil drain region along an axial direction of the main housing. The oil drain valve is in communication with the oil drain region, and sealant is filled in both the first sealing region and the second sealing region.

The following further describes the technical solution:
In one of the embodiments, the main housing includes a first half-housing and a second half-housing, and the first half-housing and the second half-housing are connected to each other to enclose a cylindrical structure.

In one of the embodiments, the sealing assembly further includes a sealing strip and at least two annular sealing gaskets, the sealing strip is provided in a splice slot between the first half-housing and the second half-housing, all of the annular sealing gaskets are arranged and spaced apart between the main housing and the oil-filled submarine cable in the axial direction of the main housing, and are sealed with the main housing and the oil-filled submarine cable to divide the space between the main housing and the oil-filled submarine cable into the oil drain region, the first sealing region and the second sealing region.

In one of the embodiments, an inner wall of the main housing is provided with at least two sealing annular slots are provided on, the at least two sealing annular slots are arranged and spaced apart along an axial direction of the main housing, and the annular sealing gaskets are embedded in the sealing annular slots in a one-to-one correspondence.

In one of the embodiments, two oil drain valves are in communication with the oil drain valve, and the two oil drain valves are arranged opposite to each other in a radial direction of the main housing.

In one of the embodiments, the first sealing region and the second sealing region are in communication with a glue injection valve and a glue discharge valve, the glue injection valve and the glue discharge valve are arranged opposite to each other in a radial direction of the main housing, and the glue injection valve is located below the glue discharge valve.

In one of the embodiments, each of two ends of the main housing is provided with a first connection flange configured to be connected to an extension housing, and the extension housing is configured to be sleeved on the oil-filled submarine cable. A space between the extension housing and the oil-filled submarine cable forms a third sealing region that is sealed, and the third sealing region is filled with the sealant.

In one of the embodiments, two ends of the extension housing are provided with a second connection flange and a third connection flange respectively, the second connection flange is configured to be connected to the first connection flange, and the third connection flange is configured to be connected to the second connection flange of another extension housing.

In one of the embodiments, the first connection flange is provided with a threaded through hole configured to allow a threaded connection member to extend through, and both the second connection flange and the third connection flange are provided with oblong holes configured to allow the threaded connection member to extend through.

In one of the embodiments, both an end surface of the first connection flange and an end surface of the third connection flange are provided with a cone groove, and an end surface of the second connection flange is provided with a cylindrical groove. A conical sealing annular is provided between the main housing and the extension housing, and/or a conical sealing annular is further provided between the adjacent two continuation housings. An end with a small diameter of the conical sealing annular is embedded in the cone groove, and an end with a large diameter of the conical sealing annular is embedded in the cylindrical groove.

In the aforementioned repairing apparatus for sealing the oil-filled submarine cable, a space between the main housing and the oil-filled submarine cable is separated into an oil drain region, and a first sealing region and a second sealing region that are located on two sides of the oil drain region respectively via the sealing assembly. Then, the oil drain valve is capable of discharging the leaked insulation oil from the oil drain region, thereby greatly reducing the possibility of leakage of the insulation oil to the first sealing region and the second sealing region, thereby preventing glue of the first sealing region and the second sealing region from being flushed away by oil, ensuring stability of a glue filling process of the first sealing region and the second sealing region. Therefore, in a process of discharging oil, glue filling is simultaneously performed, thereby improving efficiency of sealing and repairing. At the same time, the sealant is filled into the first sealing region and the second sealing region at a certain pressure. The sealant is capable of penetrating to the outside of the PE layer along a copper strip gap of the armor layer and a gap between the armor layer and the PE layer at a pressure, so as to fill the copper strip gap of the armor layer and the gap between the armor layer and the PE layer. This avoids the possibility of the axial leakage of the insulation oil along the copper strip gap of the armor layer and the gap between the armor layer and the PE layer. Therefore, the seepage sealing of the oil-filled submarine cable outside the PE layer is implemented without destroying the armor layer.

### BRIEF DESCRIPTION OF THE DRAWINGS

The accompanying drawings that constitute a part of the present invention are used to provide a further understanding of the present invention. Schematic embodiments of the present invention and descriptions thereof are used to explain the present invention, and do not constitute improper limitations of the present invention.

To describe the technical solutions in the embodiments of the present invention more clearly, the following briefly describes the accompanying drawings required for describing the embodiments. Apparently, the accompanying drawings in the following description show merely some embodiments of the present invention, and those who skill in the art may still derive other drawings from these accompanying drawings without creative efforts.

In addition, the drawings are not drawn in 1:1 ratio, and the relative sizes of the various elements are drawn in the drawings only as examples, and not necessarily in true proportion. In the drawings:
FIG. 1 is a schematic structural diagram of an oil-filled submarine cable according to an embodiment.
FIG. 2 is a schematic structural diagram of a repairing apparatus for sealing the oil-filled submarine cable according to an embodiment.
FIG. 3 is a cross-sectional view of the repairing apparatus for sealing the oil-filled submarine cable according to an embodiment.

Description of the Reference Numerals:
10: oil-filled submarine cable; 11: oil channel; 12: conductor layer; 13: insulating layer; 14: lead protective layer; 15: first nonwoven fabric layer; 16: PE layer; 17: second nonwoven fabric layer; 18: armor layer; 21: main housing; 211: first half-housing; 212: second half-housing; 213: oil drain region; 214: first sealing region; 215: second sealing region; 22: sealing assembly; 221: sealing strip; 222: annular sealing gasket; 23: oil drain valve; 24: first connection flange; 251: glue injection valve; 252: glue discharge valve; 30: extension housing; 31: second connection flange; 32: third connection flange; 33: third sealing region; 40: conical sealing annular.

### DETAILED DESCRIPTION OF THE EMBODIMENTS

To make the foregoing objects, features, and advantages of the present invention more obvious and easy to understand, the following describes a specific implementation manner of the present invention in detail with reference to the accompanying drawings. Many specific details are described in the following description to facilitate full understanding of the present invention. However, the present invention may be implemented in many different manners from those described herein. A person skilled in the art may make similar improvements without departing from the intension of the present invention. Therefore, the present invention is not limited to the specific embodiments disclosed below.

In the description of the present invention, it should be understood that if the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential", etc. appear, the orientation or position relationship indicated by these terms is based on the orientation or position relationship shown in the accompanying drawings, which is only for the convenience of describing the present invention and simplifying the description, and does not indicate or imply that the device or element referred to must have a specific orientation, be constructed and operated in a specific orientation, and therefore cannot be understood as a limitation on the present invention.

In addition, if the terms "first" and "second" appear, these terms are only used for descriptive purposes and cannot be understood as indicating or implying relative importance or implicitly indicating the number of technical features indicated. Thus, a feature defined as "first" or "second" may expressly or implicitly include at least one such feature. In the description of the present invention, if the term "a plurality of" appears, the meaning of "a plurality of" is at least two, such as two, three, etc., unless otherwise clearly and specifically defined.

In the present invention, unless otherwise clearly specified and limited, if the terms "mount", "connect together", "connect", "fix", etc. appear, these terms should be understood in a broad sense. For example, it can be a fixed connection, a detachable connection, or an integrated connection; it can be a mechanical connection or an electrical connection; it can be a direct connection or an indirect connection through an intermediate medium, it can be the internal connection of two elements or the interaction relationship between two elements, unless otherwise clearly defined. For ordinary technical people in the art, the specific meaning of the aforementioned terms in the present invention can be understood according to the specific circumstances.

In the present invention, unless otherwise clearly specified and limited, if there is a description that a first feature is "on" or "below" a second feature, etc., or similar description, it may mean that the first feature and second feature are in direct contact, or the first feature and second feature are in indirect contact through an intermediate medium. Also, the first feature is "above", "over" and "on" the second feature may mean that the first feature is directly above or obliquely above the second feature, or simply means that the first feature has a higher level than the second feature. Further, when the first feature is "below" ""under" or "on the bottom of" the second feature, the first feature may be directly below or obliquely below the second feature, or may simply indicate that the first feature is lower in level than the second feature.

It should be noted that if an element is referred to as being "fixed to" or "disposed on" another element, it may be directly on the other element or there may be a central element. If an element is considered to be "connected to" another element, it may be directly connected to the other element or there may be a central element at the same time. If present, the terms "vertical", "horizontal", "upper", "lower", "left", "right" and similar expressions used in the present invention are for illustrative purposes only and do not represent the only implementation method.

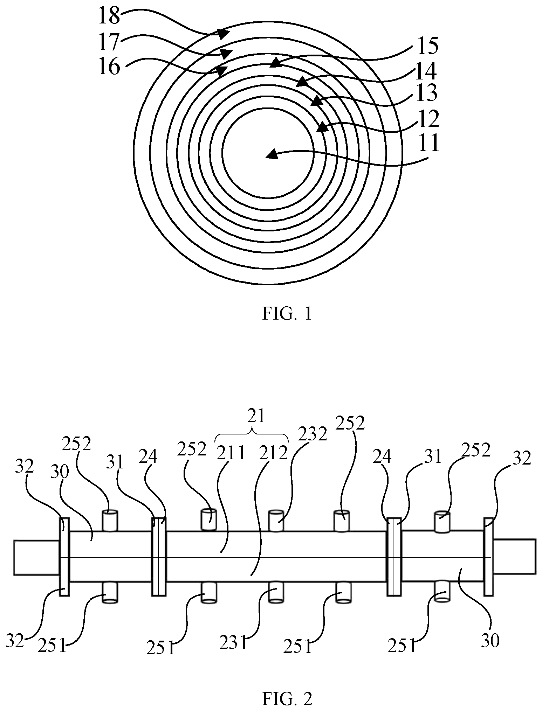

As described above, the conventional sealing repair manner for a submarine oil and gas pipeline is not ideal for sealing and repairing the oil-filled submarine cable 10. The inventors have found through extensive research that the reason for this is that the structure of oil-filled submarine cable 10 is very different from the structure of submarine oil and gas pipeline. Specifically, referring to FIG. 1, the through-groove oil-filled submarine cable 10 includes an oil channel 11, a conductor layer 12, an insulating layer 13, a lead protective layer 14, a first nonwoven fabric layer 15, a PE layer 16, a second nonwoven fabric layer 17, an armor layer 18, and an outer protective layer (not shown) that are successively sleeved from inside to outside. A gap between the armor layer 18, the PE layer 16, and the outer protective layer is relatively large, the armor layer 18 is a cylindrical structure that includes a plurality of copper strips arranged compactly in a circumferential direction, and an axial gap is also provided between the copper strips. Therefore, when the oil-filled submarine cable 10 is damaged and the insulation oil inside the oil channel 11 leaks to the outside of the oil-filled submarine cable 10, the insulation oil may leak along an axial direction between the armor layer 18, the PE layer 16, the outer protective layer, and the copper strip gap of the armor layer 18.

In the current sealing and repair method, the gap between the armor layer 18, the PE layer 16, and the outer protective layer cannot be blocked, and the leakage problem of the oil-filled submarine cable 10 in the axial direction cannot be solved. To achieve sealing, the only way is to damage the armor layer 18 of the submarine cable and carry out the sealing from the surface of the PE layer 16 of the submarine cable. After the armor layer 18 of the submarine cable is damaged, the oil-filled submarine cable 10 will lose the ability to withstand the tensile load. Considering the actual conditions of the oil-filled submarine cable 10, the axial load of the oil-filled submarine cable 10 is inevitable. Therefore, a method for effectively sealing insulation oil leakage of the oil-filled submarine cable 10 is urgently needed to solve the leakage problem of the oil-filled submarine cable 10 in an axial direction without destroying the armor layer 18 of the submarine cable.

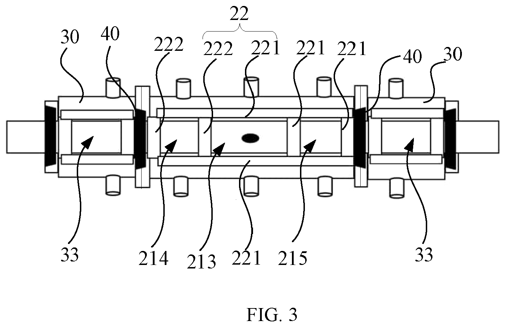

Accordingly, an embodiment of the present invention provides a repairing apparatus for sealing the oil-filled submarine cable. Specifically, referring to FIG. 2 and FIG. 3, the repairing apparatus for sealing the oil-filled submarine cable according to an embodiment includes a main housing 21 and a sealing assembly 22. The main housing 21 is configured to be sleeved on a section of the oil-filled submarine cable 10 where the leakage point is located. The sealing assembly 22 is provided in the main housing 21, and the sealing assembly 22 is configured to divide a space between the main housing 21 and the oil-filled submarine cable 10 into an oil drain region 213 corresponding to the leakage point, at least one first sealing region 214 on one side of the oil drain region 213, and at least one second sealing region 215 on the other side of the oil drain region 213 along an axial direction of the main housing 21. The oil drain region 213 is in communication with an oil drain valve 23, and sealant is filled in both the first sealing region 214 and the second sealing region 215.

Specifically, when the aforementioned repairing apparatus for sealing the oil-filled submarine cable is used, an outer protective layer of a section of the oil-filled submarine cable 10 where the leakage point is located is firstly peeled off to expose the armor layer 18, the main housing 21 is sleeved outside the armor layer 18 of the section of the oil-filled submarine cable 10 where the leakage point is located. The leakage point of the oil-filled submarine cable 10 is sealed in the oil drain region 213 of the main housing 21, and the oil drain valve 23 is opened. Then, the sealant is filled into the first sealing region 214 and the second sealing region 215 with a certain pressure. The sealant can penetrate to the outside of the PE layer 16 along the copper strip gap of the armor layer 18 and the gap between the armor layer 18 and the PE layer 16. After the sealant is cured, the oil drain valve 23 is closed, so as to complete sealing and repairing of the leakage of the oil-filled submarine cable 10.

In the aforementioned repairing apparatus for sealing the oil-filled submarine cable, a space between the main housing 21 and the oil-filled submarine cable is separated into an oil drain region, and a first sealing region 214 and a second sealing region 215 that are located on two sides of the oil drain region respectively via the sealing assembly 22. Then, the oil drain valve 23 can discharge the leaked insulation oil from the oil drain region 213, thereby greatly reducing the possibility of leakage of the insulation oil to the first sealing region 214 and the second sealing region 215, thereby preventing glue of the first sealing region 214 and the second sealing region 215 from being flushed away by the oil, thus ensuring stability of a glue filling process of the first sealing region 214 and the second sealing region 215. Therefore, in a process of discharging oil, glue filling is simultaneously performed, thereby improving efficiency of sealing and repairing. At the same time, the sealant is filled into the first sealing region 214 and the second sealing region 215 with a certain pressure. The sealant under the pressure can penetrate to the outside of the PE layer 16 along a copper strip gap of the armor layer 18 and a gap between the armor layer 18 and the PE layer 16, so as to fill the copper strip gap of the armor layer 18 and the gap between the armor layer 18 and the PE layer 16. This avoids the possibility of the axial leakage of the insulation oil along the copper strip gap of the armor layer 18 and the gap between the armor layer 18 and the PE layer 16. Therefore, the leakage sealing of the oil-filled submarine cable outside the PE layer 16 is implemented without destroying the armor layer 18.

Referring to FIG. 2, in one embodiment, the main housing 21 includes a first half-housing 211 and a second half-housing 212, and the first half-housing 211 and the second half-housing 212 are connected to each other to enclose a cylindrical structure. Specifically, during mounting, the first half-housing 211 and the second half-housing 212 are oppositely sleeved on the section of the oil-filled submarine cable 10 where the leakage point is located. The first half-housing 211 and second half-housing 212 are fastened to complete the mounting of the main housing 21. There is no need to truncate the oil-filled submarine cable 10, and the main housing 21 does not need to be sleeved on the oil-filled submarine cable 10 from an end portion thereof, thus the operation is simpler and easier. For example, the first half-housing 211 and the second half-housing 212 may be fastened by bolts.

Optionally, referring to FIG. 3, in an embodiment, the sealing assembly 22 further includes a sealing strip 221 and at least two annular sealing gasket 222. The sealing strip 221 is provided in a splice slot between the first half-housing 211 and the second half-housing 212, so as to seal the splice slot between the first half-housing 211 and the second half-housing 212, thus preventing leakage of the insulation oil or the sealant from the splice slot. Further, all the annular sealing gaskets 222 are arranged and spaced apart between the main housing 21 and the oil-filled submarine cable 10 in the axial direction of the main housing 21, and are sealed with the main housing 21 and the oil-filled submarine cable 10, so as to divide the space between the main housing 21 and the oil-filled submarine cable 10 into the oil drain region 213, the first sealing region 214 and the second sealing region 215. For example, in this embodiment, four annular sealing gaskets 222 are provided, and the four annular sealing gaskets divide the space between the main housing 21 and the oil-filled submarine cable 10 into one oil drain region 213, one first sealing region 214 on one side of the oil drain region 213, and one second sealing region 215 on the other side of the oil drain region 213. It should be understood that in other embodiments, the number of the annular sealing gasket 222 may be more, such that more sealing regions are divided between the main housing 21 and the oil-filled submarine cable 10, and a sealing effect is improved.

Optionally, in an embodiment, at least two sealing annular slots (not shown) are provided on an inner wall of the main housing 21, all the sealing annular slots are arranged and spaced apart at the axial direction of the main housing 21, and the annular sealing gaskets 222 are embedded in the sealing annular slots in a one-to-one correspondence. As such, the annular sealing gasket 222 can be axially limited and the sealing effect between the annular sealing gasket 222 and the inner wall of the main housing 21 can be improved.

Referring to FIG. 2, in an embodiment, two oil drain valves 23 are in communication with the oil drain valve 213, and the two oil drain valves 23 are arranged opposite to each other in a radial direction of the main housing 21. When discharging oil, the oil drain valve 23 located below is opened. Because a density of insulation oil is less than a density of seawater, the insulation oil can be discharged while discharging the seawater. For example, one oil drain valves 23 is mounted on the first half-housing 211, and the other oil drain valves 23 is mounted on the second half-housing 212. Therefore, during mounting, it is not necessary to distinguish between which one of the first half-housing 211 and the second half-housing 212 is located above and which one of the first half-housing 211 and the second half-housing 212 is located below, which facilitates quick mounting.

Referring to FIG. 2 sequentially, in an embodiment, the first sealing region 214 and the second sealing region 215 are provided with a glue injection valve 251 and a glue discharge valve 252, the glue injection valve 251 and the glue discharge valve 252 are arranged opposite to each other in a radial direction of the main housing 21, and the glue injection valve 251 is located below the glue discharge valve 252. Specifically, when the glue is injected, a glue injection system is connected to the glue injection valve 251, and then the glue injection is started by opening the glue injection valve 251 and the glue discharge valve 252. Because the density of the sealant is greater than the density of sea water, when the glue flows out of the glue discharge valve 252 on the above evenly, it indicates that the sealing region is full of the sealant, thereby ensuring accuracy of the glue injection amount.

Referring to FIG. 3, optionally, in an embodiment, if a sealing effect of the main housing 21 is not good and there is still an occurrence of an axial leakage, an extension housing 30 may be extended on the main housing 21. Specifically, in an embodiment, each of two ends of the main housing 21 is provided with a first connection flange 24 configured to be connected to the extension housing 30, and the extension housing 30 is configured to be sleeved on the oil-filled submarine cable 10. A space between the extension housing 30 and the oil-filled submarine cable 10 forms a third sealing region 33 that is sealed. For example, a sealing assembly is also provided in the extension housing 30, and the sealing assembly forms a third sealing region 33 between the extension housing 30 and the oil-filled submarine cable 10. Each extension housing 30 also includes two half housings, thus facilitating mounting of the extension housing 30.

Further, the third sealing region 33 is filled with the sealant. By adding the extension housing 30 to an end portion of the main housing 21, the third sealing region 33 can be added in the axial direction of the main housing 21. By injecting the sealant into the third sealing region 33, the effect of sealing in the axial direction can be enhanced, so as to avoid leakage in the axial direction. Further, the third sealing region 33 of each extension housing 30 is also in communication with the glue injection valve and the glue discharge valve, thereby facilitating injection of glue into the third sealing region 33 of the extension housing 30.

For example, in an embodiment, each of the two ends of the main housing 21 is connected to one extension housing 30. As such, one third sealing region 33 can be formed on each of the two ends of the main housing 21, thereby further improving a sealing effect. It should be understood that, theoretically, a quantity of the extension housing 30 may be increased indefinitely according to actual requirement, thereby improving extensibility of the repairing apparatus for sealing the oil-filled submarine cable.

Specifically, two ends of the extension housing 30 are provided with a second connection flange 31 and a third connection flange 32, respectively. The second connection flange 31 is configured to be connected to the first connection flange 24, and the third connection flange 32 is configured to be connected to the second connection flange 31 of another extension housing 30. As such, another extension housing 30 can be further added at an end of the extension housing 30 away from the main housing 21.

Optionally, in an embodiment, the first connection flange 24 is provided with a threaded through hole (not shown) configured to allow a threaded connection member to extend through, and both the second connection flange 31 and the third connection flange 32 are provided with oblong holes (not shown) configured to allow the threaded connection member to extend through. Specifically, when the extension housing 30 is connected to the main housing 21, the oblong hole of the second connection flange 31 may be aligned with the threaded through hole of the first connection flange 24, and then the threaded connection member extends through the oblong hole and the threaded through hole to implement the connection between the extension housing 30 and the main housing 21. Similarly, when connecting the two extension housing 30, the oblong hole of the third connection flange 32 of the extension housing 30 is aligned with the oblong hole of the second connection flange 31 of the other extension housing 30, and then the threaded connection member extends through the oblong holes to implement connection and fixing of the two extension housing 30. At the same time, the oblong holes are provided to make the holes alignment more operable and easier to mount.

Further, both an end surface of the first connection flange 24 and an end surface of the third connection flange 32 are provided with a cone groove, and an end surface of the second connection flange 31 is provided with a cylindrical groove. A conical sealing annular 40 is provided between the main housing 21 and the extension housing 30. Specifically, a conical sealing annular 40 is further provided between the adjacent two glue discharge valves 30. One end of the conical sealing annular 40 has a tapered structure to form an end with a smaller diameter, and the other end has a cylindrical structure to form an end with a larger diameter. Further, when the first connection flange 24 of the main housing 21 is connected to the second connection flange 31 of the extension housing 30, or the second connection flange 31 of the extension housing 30 is connected to the third connection flange 32 of another extension housing 30, the end with the smaller diameter of the conical sealing annular 40 between the two is embedded in the cone groove, and an end with the larger diameter of the conical sealing annular 40 is embedded in the cylindrical groove. As such, the conical sealing annular 40 can be pressed in the axial direction. On the one hand, the axial sealing performance of the repairing apparatus for sealing the oil-filled submarine cable is further enhanced, on the other hand, after the conical sealing annular 40 is squeezed, it has a certain tightening force on the armor layer 18, which can tighten the armor layer 18 and reduce the gap on the armor layer 18 and further prevent axial leakage.

The technical features of the aforementioned embodiments may be arbitrarily combined, and in order to make the description concise, all possible combinations of the technical features in the aforementioned embodiments are not described. However, as long as there is no contradiction in the combination of these technical features, it should be considered as the scope of this specification.

The above embodiments merely illustrate several embodiments of the present disclosure, and the description thereof is specific and detailed, but it shall not be constructed as limiting the scope of the disclosure. It should be noted that, for a person of ordinary skill in the art, several variations and improvements may be made without departing from the concept of the present disclosure, and these are all within the protection scope of the present disclosure. Therefore, the protection scope of the present disclosure shall be subject to the appended claims.

## Claims

1. A repairing apparatus for sealing an oil-filled submarine cable, comprising:
a main housing configured to be sleeved on a section of the oil-filled submarine cable where a leakage point is located;
a sealing assembly provided in the main housing and configured to divide a space between the main housing and the oil-filled submarine cable into an oil drain region corresponding to the leakage point, at least one first sealing region on one side of the oil drain region, and at least one second sealing region on another side of the oil drain region along an axial direction of the main housing; and
an oil drain valve in communication with the oil drain region, and sealant being filled in both the first sealing region and the second sealing region.

2. The repairing apparatus for sealing the oil-filled submarine cable according to claim 1, wherein the main housing comprises a first half-housing and a second half-housing, and the first half-housing and the second half-housing are connected to each other to enclose a cylindrical structure.

3. The repairing apparatus for sealing the oil-filled submarine cable according to claim 2, wherein the sealing assembly further comprises a sealing strip and at least two annular sealing gaskets, the sealing strip is provided in a splice slot between the first half-housing and the second half-housing, all of the annular sealing gaskets are arranged and spaced apart between the main housing and the oil-filled submarine cable in the axial direction of the main housing, and are sealed with the main housing and the oil-filled submarine cable to divide the space between the main housing and the oil-filled submarine cable into the oil drain region, the first sealing region, and the second sealing region.

4. The repairing apparatus for sealing the oil-filled submarine cable according to claim 3, wherein an inner wall of the main housing is provided with at least two sealing annular slots, the at least two sealing annular slots are arranged and spaced apart along the axial direction of the main housing, and the annular sealing gaskets are embedded in the sealing annular slots in a one-to-one correspondence.

5. The repairing apparatus for sealing the oil-filled submarine cable according to claim 1, wherein two oil drain valves are in communication with the oil drain valve, and the two oil drain valves are arranged opposite to each other in a radial direction of the main housing.

6. The repairing apparatus for sealing the oil-filled submarine cable according to claim 1, wherein the first sealing region and the second sealing region are in communication with a glue injection valve and a glue discharge valve, the glue injection valve and the glue discharge valve are arranged opposite to each other in a radial direction of the main housing, and the glue injection valve is located below the glue discharge valve.

7. The repairing apparatus for sealing the oil-filled submarine cable according to claim 1, wherein each of two ends of the main housing is provided with a first connection flange configured to be connected to an extension housing, the extension housing is configured to be sleeved on the oil-filled submarine cable, a space between the extension housing and the oil-filled submarine cable forms a third sealing region that is sealed, and the third sealing region is filled with the sealant.

8. The repairing apparatus for sealing the oil-filled submarine cable according to claim 7, wherein two ends of the extension housing are provided with a second connection flange and a third connection flange, respectively, the second connection flange is configured to be connected to the first connection flange, and the third connection flange is configured to be connected to the second connection flange of another extension housing.

9. The repairing apparatus for sealing the oil-filled submarine cable according to claim 8, wherein the first connection flange is provided with a threaded through hole configured to allow a threaded connection member to extend through, and both the second connection flange and the third connection flange are provided with oblong holes configured to allow the threaded connection member to extend through.

10. The repairing apparatus for sealing the oil-filled submarine cable according to claim 8, wherein both an end surface of the first connection flange and an end surface of the third connection flange are provided with a cone groove, and an end surface of the second connection flange is provided with a cylindrical groove;
wherein a conical sealing annular is provided between the main housing and the extension housing, and a conical sealing annular is further provided between the adjacent two extension housings;
wherein an end with a small diameter of the conical sealing annular is embedded in the cone groove, and an end with a large diameter of the conical sealing annular is embedded in the cylindrical groove.
